Europäisches Patentamt

European Patent Office

Office européen des brevets

(19)

(11) Numéro de publication: **0 159 069 B1**

## (12) FASCICULE DE BREVET EUROPEEN

(45) Date de publication de fascicule du brevet:
**27.02.91**

(51) Int. Cl.⁵: **H02K 29/14**, H02K 29/08,
H02K 7/20

(21) Numéro de dépôt: **85200434.0**

(22) Date de dépôt: **21.03.85**

(54) **Moteur électrique sans collecteur à commutation électronique.**

(30) Priorité: **11.04.84 CH 1813/84**

(43) Date de publication de la demande:
**23.10.85 Bulletin  85/43**

(45) Mention de la délivrance du brevet:
**27.02.91 Bulletin  91/09**

(84) Etats contractants désignés:
**CH DE FR GB IT LI**

(56) Documents cités:
**DE-A- 3 138 323**       **DE-A- 3 230 283**
**DE-C- 663 821**        **FR-A- 1 145 201**
**FR-A- 1 428 478**       **FR-A- 2 186 771**
**GB-A- 2 080 046**       **US-A- 3 189 808**
**US-A- 3 230 434**

**PATENTS ABSTRACTS OF JAPAN, vol. 5, no.
27 (E-46)[699], 18 février 1981; & JP-A-55 153
247 (HITACHI SEISAKUSHO K.K.) 29-11-1980**

(73) Titulaire: **Mavilor Systèmes S.A.
c/o INFRANOR S.A. Place de la Gare
CH-1296 Coppet(CH)**

(72) Inventeur: **Tassinario, Giampiero
Via Arrighetto de Settimello, 129
Calenzano Firenze(IT)**

(74) Mandataire: **Meylan, Robert Maurice et al
c/o BUGNION S.A. 10, route de Florissant
Case Postale 375
CH-1211 Genève 12 - Champel(CH)**

EP 0 159 069 B1

## Description

La présente invention concerne un moteur électrique sans collecteur à commutation électronique selon le préambule de la revendication 1.

De tels moteurs électriques sont connus du document DE-A 3 138 323. Le codeur de ces moteurs se trouve à l'extérieur de la carcasse du moteur et sert uniquement à commander la commutation du bobinage d'induit du moteur dont le rotor porte un bobinage rotorique. Si de tels moteurs doivent être munis d'une dynamo tachymétrique dont le rotor est fixé sur l'arbre du moteur, il se pose un problème d'encombrement dans le sens axial du moteur, du fait que le codeur et aussi la dynamo tachymétrique se trouvent à l'extérieur de la cage.

Un moteur similaire travaillant par excitation d'aimants permanents, comprenant un rotor portant plusieurs aimants permanents, est connu du document EP-A 0 123 347 du demandeur. Ici, le codeur est aussi constitué d'un disque solidaire de l'arbre de rotation, mais muni à proximité de sa périphérie de trous correspondant à des angles de commutation. La partie annulaire du disque munie de ces trous passe entre des émetteurs et des capteurs optoélectroniques commandant le circuit de la commutation de bobinages d'induit chaque fois qu'un trou du disque laisse passer un rayon d'un émetteur vers un capteur.

Un autre moteur sans collecteur à commutation électronique est connu du document US-A 3,189,808. Pour effectuer la commutation du bobinage d'induit de ce moteur, on a prévu à coté du rotor, qui porte des aimants permanents, un bobinage de contrôle dans lequel le rotor tournant induit des tensions multiphases de controle. Ces tensions multiphases de contrôle commandent, par l'intermédiaire d'un groupe de redresseurs contrôlés, la commutation du bobinage d'induit du moteur. L'unité qui comprend ce bobinage de contrôle est appelée, dans la description du document US-A 3,189,808, générateur tachymétrique; cependant, étant donné qu'aucun moyen n'est prévu pour créer une tension continue proportionnelle à la vitesse du moteur pour mesurer cette vitesse, il ne s'agit évidemment pas d'un générateur tachymétrique au sens propre, mais cette unité sert uniquement à la commutation du bobinage d'induit du moteur.

L'invention a pour but de créer un moteur du type mentionné avec une dynamo tachymétrique tel que son encombrement axial est réduit, et de simplifier sa construction.

Pour atteindre ce but, le moteur selon l'invention est caractérisé par la clause caractérisante de la revendication 1.

Les avantages de cet ensemble moteur et dynamo sont, d'une part, le faible encombrement axial du fait du rotor plat de la dynamo et, d'autre part, l'économie d'une partie mobile du fait que le codeur du moteur est à la fois celui de la dynamo, ledit disque codeur contrôlant et la commutation du bobinage d'induit du moteur et la commutation du bobinage d'induit de la dynamo, sous condition de compatibilité du nombre des pôles et de la configuration des bobinages du moteur et de la dynamo. Le rotor de la dynamo se présente, comme le rotor du moteur, sous la forme d'un disque dans lequel sont fixés autour de son axe des aimants dont l'axe est parallèle à l'arbre.

Selon une autre exécution le rotor de la dynamo est formé d'un aimant annulaire dont une face latérale constitue le pôle nord et l'autre le pôle sud, deux disques en fer d'un diamètre supérieur à celui de l'aimant étant plaqués respectivement sur les deux pôles. Les bords périphériques de deux disques s'étendant au delà de la périphérie de l'aimant sont découpés à un nombre de créneaux égaux en nombre et dimensions, et disposés de sorte que chacun des créneaux d'un disque se trouve entre deux créneaux de l'autre disque, 14 périphérie du rotor étant ainsi composée d'une succession de pôles magnétiques alternés. Cette construction présente l'avantage d'être simple et bon marché.

L'invention sera décrite plus en détail à l'aide du dessin annexé représentant plusieurs exemples.

La figure 1 représente une vue en coupe axiale d'un moteur avec dynamo tachymétrique.

La figure 2 représente une vue de côté des capteurs magnétiques.

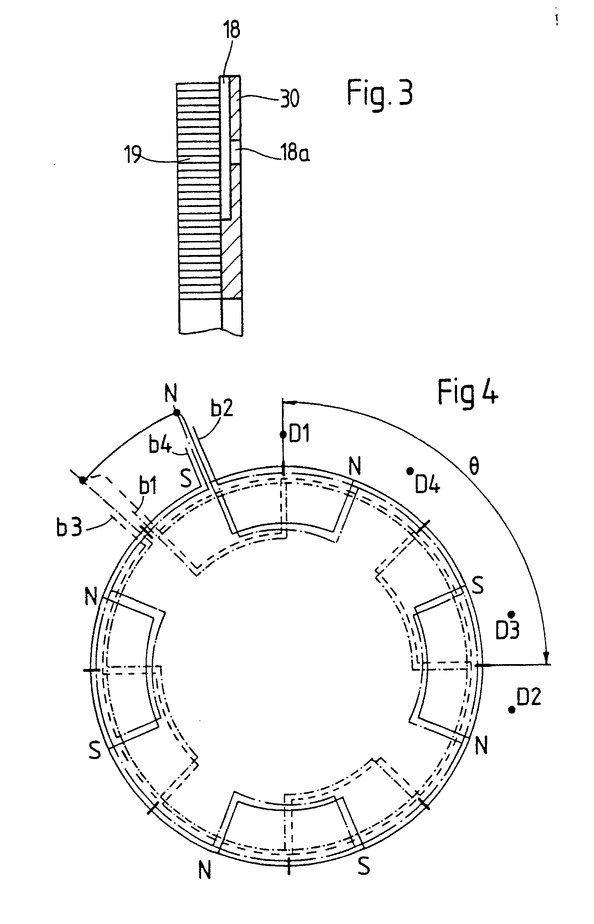

La figure 3 est une vue en coupe fortement agrandie de la figure 2 selon la ligne III-III.

La figure 4 est une vue schématique de la disposition des enroulements de l'induit d'une dynamo tachymétrique à quatre phases.

La figure 5 représente le montage électrique en étoile de quatre enroulements de la figure 4 ainsi que les commutateurs.

La figure 6 est une représentation schématique d'une paire de pôles du rotor d'une dynamo avec la disposition de capteurs magnétiques, des signaux émis par les capteurs magnétiques au fur et à mesure de la rotation du rotor, des signaux commandant la commutation des enroulements d'induit de la dynamo, et enfin les signaux commandant la commutation des bobinages d'induit du moteur.

La figure 7 représente les tensions induites dans les phases du bobinage de la dynamo de la figure 5,

La figure 8 représente le montage de l'induit d'une dynamo à deux phases.

La figure 9 est une vue schématique de la disposition des enroulements de l'induit de la dynamo de la figure 8.

La figure 10 représente les tensions induites aux bornes des phases des enroulements de la dynamo selon la figure 8.

La figure 11 est une vue en plan d'un rotor formé par un aimant annulaire et deux disques.

La figure 12 est une coupe de la figure 12 selon la ligne XII-XII.

La figure 13 est un schéma du dispositif commandant la commutation des induits d'un moteur et d'une dynamo à partir du codeur de la dynamo.

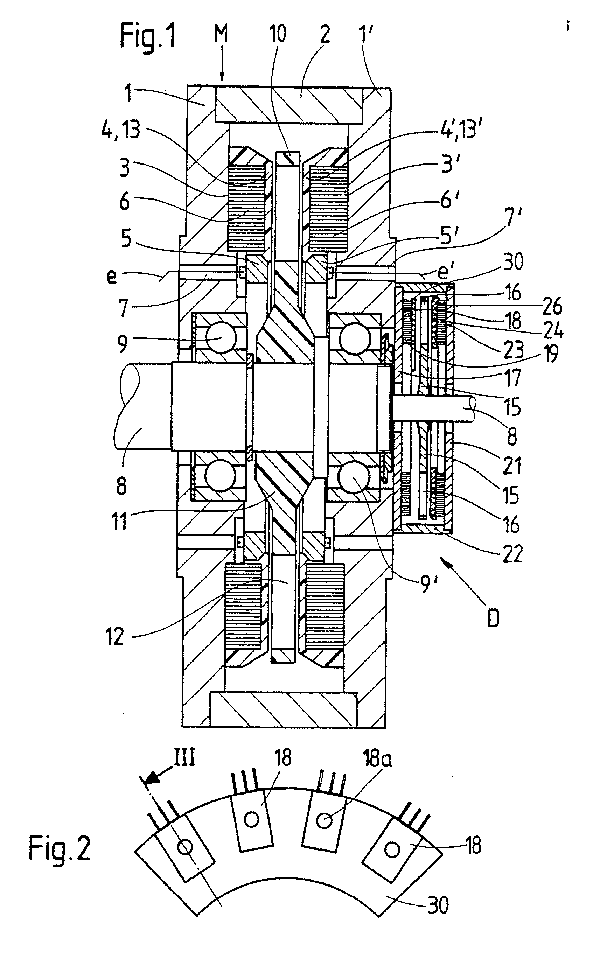

A la figure 1 nous avons représenté un moteur M et une dynamo D accouplés sur le même arbre 8, Le moteur est un moteur analogue à celui décrit dans la demande de brevet européen EP-A-0 123 347 à la seule différence que son rotor est muni de quatre paires de pôles et son induit est constitué d'un nombre supérieur d'enroulements. Il est constitué de deux moitiés de stator disbosées symétriquement de chaque côté du rotor 10 en forme de disque, ces demi-stators étant constitués chacun d'un flasque 1, respectivement 1' en aluminium et de l'induit 3, respectivement 3', fixé à la face intérieure du flasque correspondant 1, respectivement 1'. Les deux flasques 1 et 1' sont reliés par un anneau 2 de manière à former un boîtier. L'induit 3 est constitué d'un bobinage d'induit 4 en forme de panier plat et d'un fer d'induit annulaire 6, tous les deux noyés dans une matière plastique 13, ainsi que incorporé coaxialement dans l'espace intérieur de ces deux éléments, d'un anneau de connexions 5 noyé partiellement dans une matière plastique (non représentée) dont la zone périphérique est elle-même noyée dans la matière 13. L'induit 3 ainsi formé constitue une pièce compacte. Le fer d'induit 6 est formé par l'enroulement d'une tôle magnétique en forme de ruban, formant un paquet de tôles de forme annulaire et le bobinage d'induit 4 est disposé sur son côté en regard du rotor 10. L'autre induit 3' a la même construction composée des éléments 4',5' et 6' ainsi que des matières plastiques 13' et celle de l'anneau 5'.

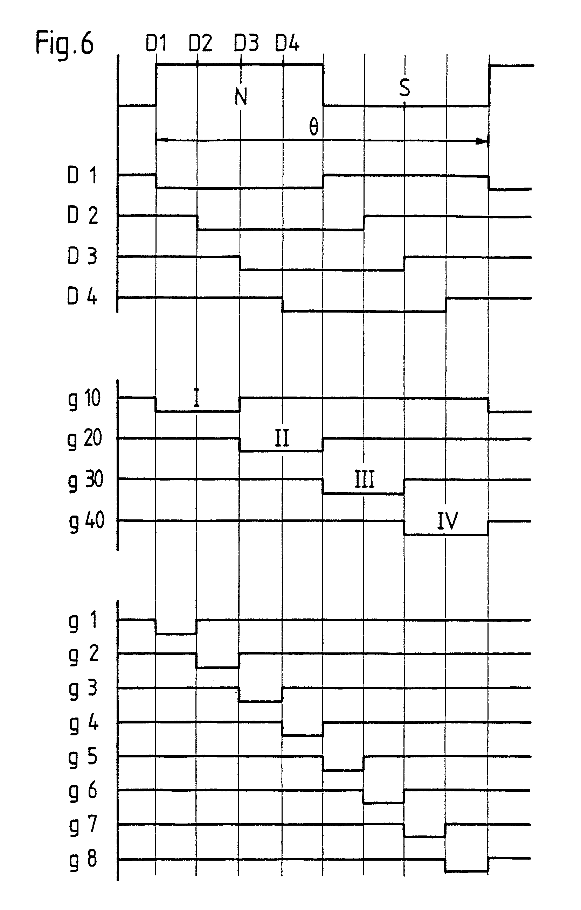

L' anneau de connexions 5, respectivement 5' est divisé en une pluralité de segments isolés les uns des autres et aux extrémités desquels sont connectées les enroule ments constituant le bobinage d'induit 4, respectivement 4'` Des conducteurs électriques e, e' connectent les segments de l'anneau de connexions 5, respectivement 5' vers l'extérieur aux circuits de commutation électronique, et passent à travers des canaux 7, respectivement 7' s'étendant parallèlement à l'axe du moteur dans le flasque 1, respectivement 1'. Lesdits circuits sont commandés par le codeur rotatif de la dynamo D comme décrit précédemment notamment en relation avec les figures 6 et 13.

La construction et le branchement des bobines constituant le bobinage d'induit 4, respectivement 4' sont décrits dans la demande de brevet européen EP-A-0 123 347 à la seule différence que pour des questions de compatibilité le rotor du moteur de la figure 13 est muni de quatre paires de pôles magnétiques par face et le bobinage d'induit est composé de trente deux bobines, quatre bobines étant connectées en série par le circuit de commutation électronique à un instant déterminé lors de l'une des huit commutations par cycle électrique. Chacun des bobinages d'induit 4, 4' est réalisé sous la forme d'un enroulement imbriqué tel qu'il est utilisé dans des moteurs à courant continu conventionnels.

Le rotor 10 en forme de disque plat est, par exemple, pressé sur l'arbre 8 du moteur. Il est constitué d'un corps 11 en résine synthétique qui présente intérieurement une surépaisseur formant un moyeu. Dans le corps 11 , dans l'exemple considéré, sont noyés huit aimants permanents 12 présentant la forme de segment d'anneau, qui sont par exemple incorporés dans un support et fibre de carbone présentant des logements prévus, le tout étant noyé dans la résine synthétique qui rend le rotor solidaire du moyeu fixé sur l'arbre 8 du moteur. Pour le reste la construction du rotor 10 est analogue à celle du rotor 15 de la dynamo D qui sera décrit ci-dessous.

La dynamo D comporte un rotor 15 en forme de disque, fixé sur l' arbre 8 d'un moteur M dont la vitesse de rotation doit être mesurée. D'un côté de ce rotor est disposé un induit 23 fixé à la face intérieure d'un flasque 21 statorique tandis que de l'aute côté du rotor 15 est monté un système de capteurs magnétiques 18, fixes, qui seront décrits en détail ultérieurement.

L'induit 23 est constitué d'un bobinage d'induit 24, en forme de panier plat et d'un fer d'induit annulaire 26, tous les deux noyés dans une matière plastique. L'induit 23 ainsi constitué forme une pièce compacte Le fer d'induit 26 est formé par l'enroulement d'une tôle magnétique en forme de ruban, formant un paquet de tôles de forme annulaire et le bobinage d'induit 24 est disposé sur un côté en regard du rotor 15.

Des conducteurs électriques, non représentés. conduisent des extrémités des enroulements constituant le bobinage d'induit 24 vers l'extérieur aux circuits de commutation électronique lesquels sont commandés par un codeur rotatif dont la partie mobile est constituée par le rotor 15 lui-même lequel coopère avec les capteurs magnétiques 18.

Le rotor 15 en forme de disque plat est, par exemple. pressé sur l'arbre 8 du moteur. Il est constitué d'un corps en résine synthétique qui présente intérieurement une surépaisseur formant un moyeu. Dans le corps, selon figure 1 dans l'exemple considéré, sont noyés huit aimants permanents 16 présentant la forme de segment d'anneau, qui sont par exemple incorporés dans un support en fibre de carbone présentant des logements adaptés, le tout étant noyé dans la résine synthétique qui rend le rotor solidaire du moyeu fixé sur l'arbre 8 du moteur. Ces aimants permanents 16 ont leur axe magnétique parallèle à l'arbre a et engendrent par conséquent des champs magnétiques parallèles à l'arbre. L'épaisseur des aimants permanents 16, dont les faces polaires sont libres de chaque côté, est approximativement aussi grande que l'épaisseur de la zone en matière synthétique qui les entoure. Les aimants permanents 16 sont répartis régulièrement sur la périphérie du rotor 15 et disposés de telle sorte que sur chacune des faces du rotor les faces polaires se succédant selon la circonférence, présentent une polarité alternante, ainsi sur chacune des faces du rotor on trouve quatre paires de pôles régulièrement répartis.

Les capteurs magnétiques 18, constitués dans cet exemple par des générateurs Hall, sont fixés par pression dans les orifices 18a d'une plaque isolante 30 collée sur la face plane d'un fer annulaire 19 coaxial à l'axe du rotor 15 et fixée sur un flasque statorique 17. Ce fer annulaire 19 est de préférence constitué par l'enroulement d'une tôle magnétique en forme de ruban, formant un paquet de tôles de forme annulaire comme le fer d'induit 26 pour fermer les champs magnétiques. Les deux flasques 17 et 21 sont reliés par un anneau 22 de manière à former un boîtier.

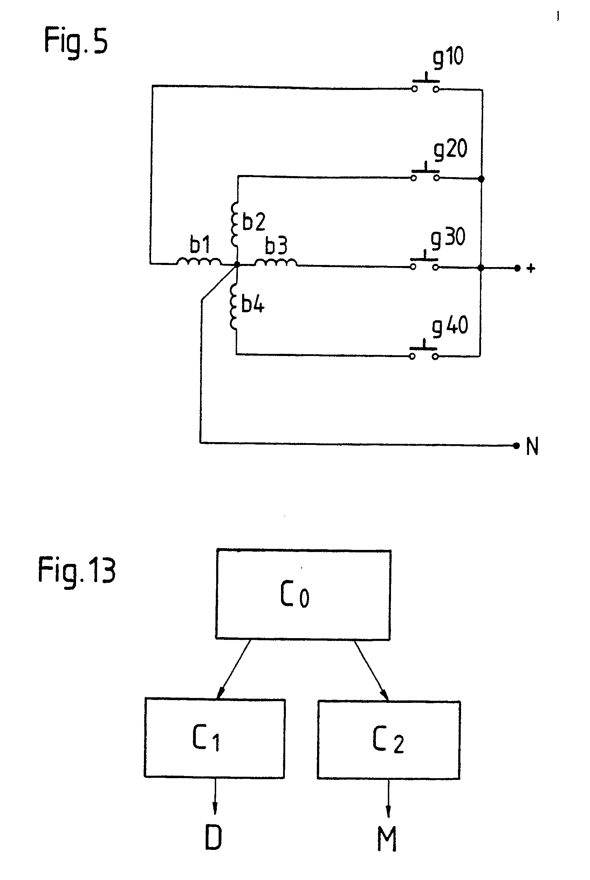

Le bobinage 24 de la dynamo est formé, dans un premier exemple, par quatre enroulements b1, b2, b3, b4 montés en étoile comme représenté a la figure 5 tandis qu'à la figure 4 on a représenté schématiquement la position relative de quatre enroulements constitués chacun par quatre bobines individuelles connectées en série. L'angle 0 est égal dans le cas précis à 90° et correspond à un cycle électrique c'est-à-dire à un angle électrique de 360°, le rotor étant muni de quatre paires de pôles magnétiques.

Les enroulements b1 et b3 respectivement b2 et b4 sont superposés mais bobinés dans le sens opposé ainsi les tensions induites dans les enroulements superposées sont de signe contraire correspondant à un déphasage d'un angle électrique de 180°. Les deux groupes d'enroulements superposés sont décalés d'un quart de cycle électrique (=90°) soit d'un angle géométrique de 22,5° puisqu'un cycle électrique correspond dans ce cas à 90°, une paire de pôles magnétiques occupant physiquement un angle géométrique de 90°. Les tensions induites dans les enroulements b1 à b4 et notamment le seuil positif est appliqué à la sortie de la dynamo représenté par les points + et N de la figure 5, au moyen des commutations successives des commutateurs g10, g20, g30 et g40.

Pour représenter schématiquement la commutation, indépendamment de l'exécution de la figure 1, nous avons représenté schématiquement à la figure 6 une paire de pôles et nous avons indiqué la position de quatre capteurs magnétiques D1,D2,D3,D4 qui dans le cas présent sont des capteurs à effet Hall. Ces quatre capteurs sont fixés face au rotor sur la partie statorique de la dynamo,comme représenté à la figure 1. L'espacement angulaire de deux capteurs successifs doit être égal à un angle électrique de 45° soit un angle géométrique de 11,25°.

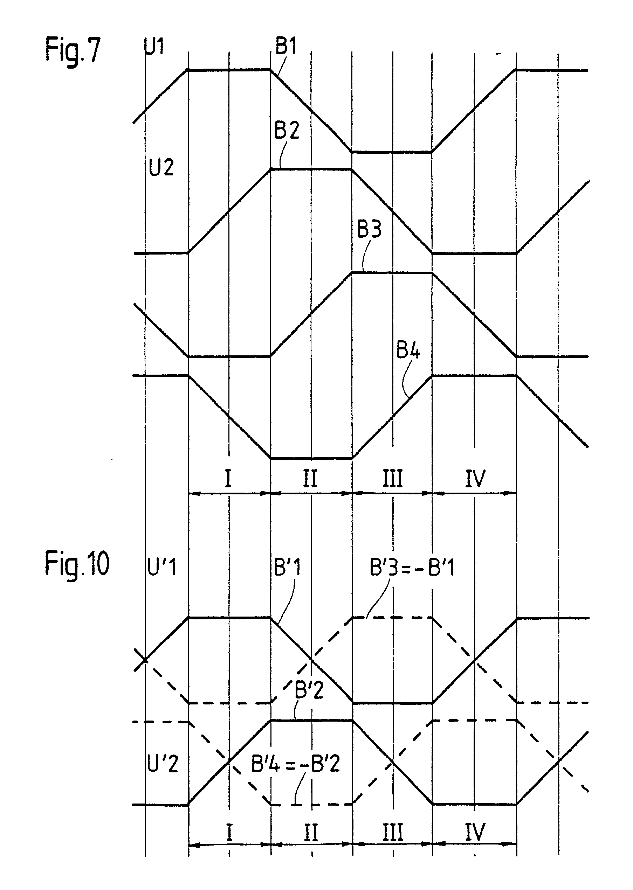

Au dessous de deux pôles on a représenté les signaux émis par les capteurs de Hall D1, D2, D3, D4 lors du passage du pôle Nord d'une paire de pôles devant eux. Les quatre signaux commandant les commutations des commutateurs g10, g20, g30 et g40 sont dérivés uniquement des signaux émis par les capteurs D1 et D3 car on doit commander quatre commutations par cycle électrique et les signaux D1, D3 étant déphasés d'un quart de cycle électrique (=90°) et gardant une valeur constante sur la longueur d'un demi cycle (=180°) permettent ainsi de générer les quatre signaux g10, g20, g30, g40 commandant la commutation des enroulements de l'induit de la dynamo pendant des intervalles I, II, III, IV chacun égal à un angle électrique de 90°. Les tensions induites B1, B2, B3, B4 dans les enroulements b1, b2, b3, b4 sont représentées sur la figure 7 ainsi que les quatre intervalles I, II, III, IV correspondant au temps pendant lequel les tensions induites B1, B2, B3, B4 se trouvent au seuil supérieur. Dans le cas présent où la dynamo est couplée à un moteur électrique à huit pôles (analogue à celui décrit dans la demande de brevet européen EP-A-0 123 347) on doit générer huit signaux de commutation par cycle électrique et dans ce cas ces huit signaux g1 à g8 sont générés à l'aide de quatre signaux D1 à D4.

A la figure 13 on a représenté schématiquement les dispositifs commandant la commutation des enroulements des induits du moteur et de la dynamo à partir du codeur de la dynamo. Les signaux émis par le codeur Co de la dynamo, par exemple par les capteurs Hall D1, D2, D3, D4 sont envoyés dans deux circuits électroniques C1, qui générera les signaux de commutation g10, g20, g30 et g40 de l'induit de la dynamo D, et C2, qui générera les signaux de commutation g1, g2....g8 de l'induit du moteur M, bien sûr sous condition de la compatibilité des pôles du moteur et de la dynamo. Un exemple de structure d'induit de moteur est donné ultérieurement utilisant huit signaux de commutation.

N' étant pas possible de disposer sur un arc géométrique de 33,75° les quatre capteurs D1, D2, D3, D4 on les dispose comme indiqué sur la figure 4 où c'est surtout les positions angulaires qui y sont indiquées. Le quatrième capteur D4 est disposé à 33,75° du premier, le deuxième D2 à 101,25° qui correspond donc bien au déplacement de la seconde paire de pôles d'un angle de 11,25°. Le troisième capteur D3 est disposé à 77,5° du premier et il est excité par le passage du pôle Sud de la paire de pôles et à cause de cela le signal émis par ce capteur est inversé avant d'être utilisé. Bien entendu cette disposition de quatre capteurs est une parmi plusieurs possibilités et dépend des dimensions de la dynamo.

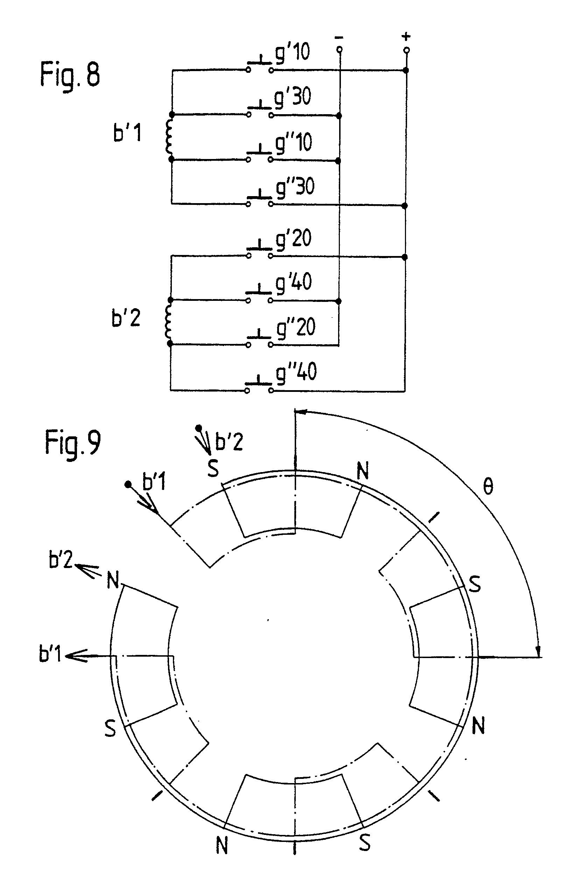

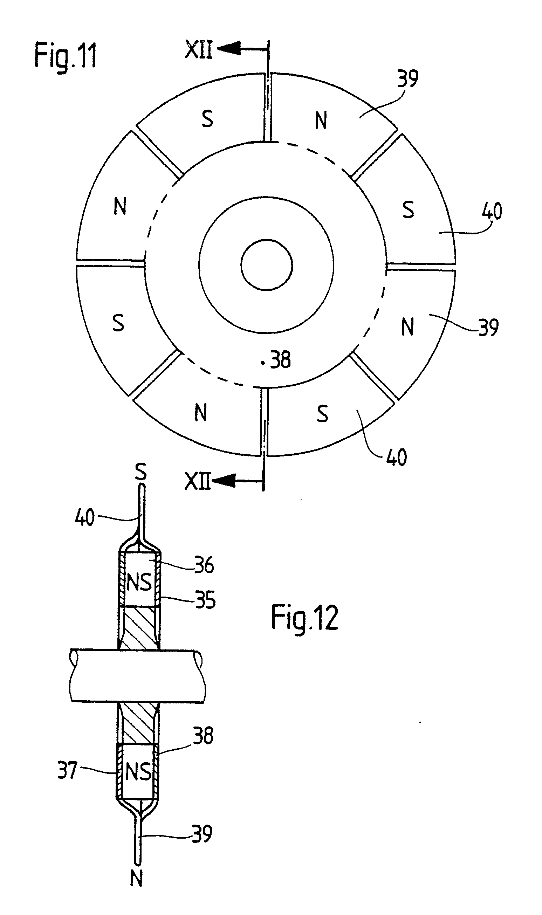

Une autre variante de bobinage d'induit constitué par deux enroulements b'1, b'2 est représenté à la figure 8. En commandant la commutation de deux bornes de chacun des enroulements par huit commutateurs g'10,g"10, g'20, g"20, g'30, g"30, g'40, g"40 on obtient aux bornes de sorties + et - de la dynamo quatre tensions induites correspondant à celles de la dynamo dont le bobinage est constitué de quatre enroulements montés en étoile. L'avantage de l'induit avec les deux enroulements de la figure 8 est que chaque enroulement b 1 b'2 a plus de spires que chacun des enroulements b1 à b4 ce qui permet d'augmenter la valeur des tensions induites correspondantes B'1, B'2. A la figure 9 on a représenté la disposition relative de deux bobines b1', b2' constitué chacun par quatre bobines individuelles connectées en série dont d'ailleurs la position correspond à celle des enroulements b1 et b3 de l'induit décrit précédemment. Les signaux décrits en relation avec la figure 6 sont les mêmes pour cet induit la seule différence est que le signal g10 commande la commutation des commutateurs g'10, g"10, g20 commande les commutations des commutateurs g'20 g"20 et ainsi de suite. A la figure 10 on a d'ailleurs représenté les deux tensions induites B'1 et B'2 et les tensions opposées B'3 et B'4 qui sont obtenues aux bornes + et - de l'induit de la figure 8 lorsqu'on ferme les commutateurs g'30, g"30 respectivement g'40, g"40 au moyen de signaux de commande g30 et g40.

Sur les figures 11 et 12 est illustrée une variante d'exécution du rotor 35 lequel est constitué par un aimant annulaire 36 dont une face latérale constitue le pôle nord tandis que l'autre face latérale constitue le pôle sud. Sur la face latérale nord est plaqué un disque métallique 37 d'un diamètre supérieur au diamètre de l'aimant annulaire 36, le bord périphérique de ce disque dépassant de l'aimant étant découpé en créneaux égaux 39. Sur la face latérale sud de l'aimant annulaire 36 est plaqué un second disque métallique 38 de même dimension et forme que le premier disque métallique 37 et qui est également muni à sa périphérie de créneaux 40 égaux en nombre et en dimension à ceux du premier disque 37. Les deux disques 37,38 sont plaqués contre l'aimant annulaire 36 de telle sorte que chaque créneau 39 du premier disque 37 se trouve dans l'intervalle entre deux créneaux 40 du deuxième disque 38 sans contact, la partie crénelée de chaque disque étant légèrement pliée de manière à se trouver dans le même plan de symétrie de l'aimant annulaire. On obtient ainsi un rotor dont la périphérie comporte une succession de créneaux 39,40 de polarité alternée.

## Revendications

1. Moteur électrique (M) sans collecteur à commutation électronique comprenant un rotor (10), au moins un induit (3) fixe pourvu d'un bobinage d'induit (4) dont la commutation est commandable par un codeur à travers un circuit de commutation électronique (C2), ledit codeur créant des signaux en fonction de la position angulaire du rotor (10) et étant constitué d'un disque codeur fixé sur l'arbre (8) du moteur et portant plusieurs aimants permanents (16) dont l'axe magnétique s'étend parallèlement à l'arbre (8), ce disque codeur coopérant avec un système de capteurs magnétiques (18) fixes, de préférence des générateurs Hall, ce système étant monté d'un des côtés du disque codeur, caractérisé en ce que ledit moteur (M) est à excitation à aimants permanents, son rotor (10) portant plusieurs aimants permanents (12), que ledit disque codeur est simultanément le rotor (15) d'une dynamo tachymétrique (D) du type sans collecteur à commutation électronique, munie d'un induit fixe (23) monté de l'autre côté de ce rotor (15) et pourvue d'un bobinage d'induit (24), que la commutation dudit bobinage d'induit (24) est commandée elle aussi par ledit codeur du moteur (M) via un circuit de commutation électronique (C1) séparé du circuit de commutation électronique (C2) du moteur, et que le nombre de pôles et la configuration du bobinage d'induit (24) de la dynamo (D) sont compatibles avec le nombre de pôles et la configuration du bobinage d'induit (4) du moteur (M). plaque isolante (30) collée sur la face plane d'un fer annulaire (19) coaxial à l'axe du rotor (15) et fixée sur un flasque statorique (17), ce fer annulaire étant constitué de préférence d une tôle magnétique en forme de ruban muni d'une couche isolante et enroulé sur lui-même.

2. Moteur selon les revendications 1 ou 2, caractérisé en ce que le bobinage d'induit (24) de la dynamo (D) a la forme d'une rosette plate comprenant une multitude de bobines qui se recouvrent mutuellement partiellement, montée sur la face sensiblement plane d'un fer d'induit (26) constituée d'un anneau coaxial à l'axe du rotor (15) cet anneau étant constitué d'une tôle magnétique en forme de ruban muni d'une couche isolante et enroulé sur lui-même.

3. Moteur selon la revendication 1 , caractérisé en ce que le rotor (35) est formé par un aimant annulaire (36) dont une face latérale constitue le pôle nord tandis que l'autre face latérale constitue le pôle sud, un disque en fer (37) d'un diamètre supérieur au diamètre de l'aimant annulaire (36) étant plaqué contre la face nord de l'aimant annulaire, son bord périphérique qui dépasse l'aimant étant découpé en créneaux égaux (39), un second disque en fer (38) de mêmes dimensions et forme que le premier disque (37) étant appliqué contre la face sud de l'aimant annulaire (36), les créneaux (40) à sa périphérie sont égaux en nombre et en dimensions à ceux (39) du premier disque (37), ce deuxième disque métallique (38) étant monté décalé par rapport au premier disque de sorte que chacun de ses créneaux se trouve dans l'intervalle entre deux créneaux (39) du premier disque (37) de sorte que la périphérie du rotor (35) comporte une succession de faces polaires de polarité alternée.

4. Moteur selon la revendication 1, caractérisé par le fait que le bobinage de la dynamo comprend deux phases ou quatre phases dont la commutation sur un cycle électrique est commandée par quatre signaux de commande dérivés de deux signaux émis par quatre capteurs magnétiques actionnés sur un angle électrique de 180°, et que la commutation du circuit de bobinage d'induit du moteur sur un cycle électrique est commandée par huit signaux de commande dérivés des quatre signaux émis par les quatre capteurs magnétiques et que les rotors du moteur et de la dynamo sont munis de préférence de quatre paires de pôles par face.

5. Moteur selon la revendication 5, caractérisé par le fait que les capteurs magnétiques sont disposés dans un angle géométrique de 101,25° mais de sorte à être actionnés successivement sur un angle électrique de 180°.

## Claims

1. A commutatorless electric motor (M) with electronic commutation comprising a rotor (10), at least one fixed armature (3) provided with an armature winding (4) of which the commutation is controllable by means of a coder through an electronic commutation circuit (C2), said coder generating signals as a function of the angular position of the rotor (10) and consisting of a coding disc secured to the shaft (8) of the motor and carrying a plurality of permanent magnets (16) having their magnetic axes parallel to the motor shaft (8), said coding disc cooperates with a set of fixed magnetic sensors (18), preferably of the Hall generator type, said set being mounted on one side of said coding disc, characterized in that said motor (M) is of the type with permanent magnet excitation, its rotor (10) carrying a plurality of permanent magnets, that said coding disc constitutes at the same time the rotor (15) of a commutatorless tachometric generator (D) with electronic commutation provided with a fixed armature (23) mounted on the opposite side of said rotor (15) and equipped with an armature winding (24), that the commutation of said armature winding (24) is also controlled by said coder of the motor (M) via an electronic commutation circuit (C1), separated from the electronic commutation circuit (C2) of the motor, and that the number of poles and the configuration of the armature winding (24) of said generator (D) is compatible with the number of poles and the configuration of said armature winding (4) of the motor (M).

2. The motor according to claim 1, characterized in that said magnetic sensors are embedded in a plate (30) of insulating material cemented to the flat face of an annular iron (19) coaxial with the shaft of the rotor (15) and attached to a stator flange (17), said annular iron consisting preferably of magnetic laminations in the form of a tape coated with an insulating layer and coiled on itself.

3. The motor according to claim 1 or 2, characterized in that the armature winding (24) of the generator (D) has the configuration of a flat rosette comprising a plurality of coils partially overlapping each other and mounted on the substantially flat face of an armature iron (26) consisting of a ring coaxial to the shaft of the rotor (15) , said ring consisting of a magnetic lamination in the form of a tape coated with an insulating layer and coiled on itself.

4. The motor according to claim 1, characterized in that said rotor (35) is formed by an annular magnet (36) of which one side face is the north pole and the other side face is the south pole, an iron disc (37) having a greater diameter than said annular magnet (36) being cemented to the north face of said annular magnet with its peripheral edge protruding radially beyond the edge of said annular magnet and formed with equal spaced battlements (39), a second iron disc (38) of same size and shape as said first disc (37) and cemented to the south face of said annular magnet (36) and also provided on its peripheral edge with battlements (40) equal in number and size to the battlements (39) of said first disc (37), said second iron disc (38) being shifted angularly in relation to said first disc, whereby each one of the battlements of said second disc is positioned between a pair of adjacent battlements (39) of said first disc (37), said periphery of the rotor (35) thus comprising a sequence of pole faces of alternate polarities.

5. The motor according to claim 1, characterized in that said generator winding comprises two or four phases of which the commutation on one electrical cycle is controlled by four control signals derived from two signals emitted by four magnetic sensors actuated on a 180-degree electrical angle, that the commutation ·of the motor armature winding circuit on one electrical cycle is controlled by eight control signals derived from the four signals emitted from the four magnetic sensors, and that the rotors of said motor and generator being provided with preferably four pairs of poles per face.

6. The motor according to claim 5, characterized in that said magnetic sensors are disposed within a geometrical angle of 101.25°, but in such a way that they are actuatable sequentially through a 180-degree electrical angle.

**Ansprüche**

1. Kommutatorloser Elektromotor (M) mit elektronischer Kommutierung, mit einem Rotor (10) und mit wenigstens einem festen Anker (3), der mit einer Ankerwicklung (4) versehen ist, deren Kommutierung durch einen Kodierer über eine elektronische Kommutierungsschaltung (C2) steuerbar ist, wobei der erwähnte Kodierer Signale als Funktion der Winkelstellung des Rotors (10) erzeugt und aus einer Kodierscheibe besteht, die an der Motorwelle (8) befestigt ist und mehrere Dauermagneten (16) trägt, deren magnetische Achse sich parallel zur Welle (8) erstreckt, und wobei diese Kodierscheibe mit einem System von festen magnetischen Fühlern ,(18), vorzugsweise Hall-Generatoren, zusammenwirkt und dieses System auf der einen Seite der Kodiererscheibe montiert ist, dadurch gekennzeichnet, dass der erwähnte Motor (M) ein Motor mit Dauermagneterregung ist, wobei sein Rotor (10) mehrere Dauermagnete (12) trägt, dass die erwähnte Kodierscheibe gleichzeitig der Rotor (15) eines kommutatorlosen Tachogenerators (D) mit elektronischer Kommutierung ist, der mit einem festen Anker (23) versehen ist, welcher auf der anderen Seite dieses Rotors (15) befestigt und mit einer Ankerwicklung (24) versehen ist, dass die Kommutierung dieser Ankerwicklung (24) ebenfalls von dem erwähnten Kodierer des Motors (M) über eine elektronische Kommutierungsschaltung (C1) gesteuert wird, die von der elektronischen Kommutierungsschaltung (C2) des Motors getrennt ist, und dass die Anzahl der Pole und die Konfiguration der Ankerwicklung (24) des Tachogenerators (D) mit der Anzahl der Pole und der Konfiguration der Ankerwicklung (4) des Motors (M) kompatibel sind.

2. Motor nach Anspruch 1, dadurch gekennzeichnet, dass die magnetischen Fühler in einer isolierenden Platte (20) eingebaut sind, welche auf die ebene Fläche eines Eisenrings (19) geklebt ist, welcher koaxial zur Achse des Rotors (15) liegt und auf einem Statorflansch (17) befestigt ist, wobei dieser Eisenring vorzugsweise aus einem Magnetblech in Form eines Bandes besteht, das mit einer isolierenden Schicht versehen und auf sich selber aufgewickelt ist.

3. Motor nach den Ansprüchen 1 oder 2, dadurch gekennzeichnet, dass die Ankerwicklung (24) des Generators (D) die Form einer flachen Rosette hat, die eine Vielzahl von sich teilweise gegenseitig überlappenden Spulen aufweist und auf der im wesentlichen ebenen Seite eines Ankerblechs (26) montiert ist, welches aus einem zur Achse des Rotors (15) koaxialen Ring gebildet wird, und dass dieser Ring aus einem Magnetblech in Form eines Bandes besteht, welches mit einer isolierenden Schicht versehen und auf sich selber aufgewickelt ist.

4. Motor nach Anspruch 1, dadurch gekennzeichnet, dass der Rotor (35) durch einen ringförmigen Magneten (36) gebildet ist, dessen eine Seitenfläche den Nordpol darstellt, während die andere Seitenfläche den Südpol darstellt, dass eine aus Eisen bestehende Scheibe (37), deren Durchmesser grösser als der Durchmesser des ringförmigen Magneten (36) ist, an der Nordfläche des ringförmigen Magnetes anliegt und dass ihr den Magneten überragender Umfangsrand unter Bildung gleicher zinnenförmiger Abschnitte (39) ausgeschnitten ist, dass eine zweite,aus Eisen bestehende Scheibe (38) mit denselben Abmessungen und derselben Form wie die erste Scheibe (37) an der Südfläche des ringförmigen Magneten (36) anliegt und die an ihrem Umfang vorgesehenen zinnenförmigen Abschnitte (40) die gleiche Anzahl und die gleichen Abmessungen wie diejenigen (39) der ersten Scheibe (37) aufweisen und dass diese zweite metallische Scheibe (38) in Bezug auf die erste Scheibe versetzt montiert ist, derart, dass sich jeder ihrer zinnenförmigen Abschnitte im Intervall zwischen zwei zinnenförmigen Abschnitten (39) der ersten Scheibe (37) befindet, so dass der Umfang des Rotors (35) eine Folge von Polflächen mit abwechselnder Polarität aufweist.

5. Motor nach Anspruch 1, dadurch gekennzeichnet, dass die Wicklung des Generators zwei oder vier Phasen hat, deren Kommutierung über eine elektrische Periode von vier Steuersignalen gesteuert wird, die aus zwei Signalen abgeleitet werden, welche von vier, über einen elektrischen Winkel von 180° betätigten magnetischen Fühlern abgegeben werden, dass die Kommutierung der Schaltung der Ankerwicklung des Motors über eine elektrische Periode durch acht Steuersignale gesteuert wird, die von vier Signalen abgeleitet werden, welche von den vier magnetischen Fühlern abgegeben werden, und dass die Rotoren des Motors und des Generators vorzugsweise mit vier Polpaaren je Fläche versehen sind.

6. Motor nach Anspruch 5, dadurch gekennzeichnet, dass die magnetischen Fühler in einem geometrischen Winkel von 101,25° angeordnet sind, jedoch derart, dass sie aufeinanderfolgend über einen elektrischen Winkel von 180° betätigt werden.

Fig.1

M   10   2   1'

1

4,13

3

6

5

e

7

9

8

11

8

12

4',13'

3'

6'

5'

e'

7'

30

16

26

18

24

23

19

17

15

8

21

15

16

22

9'

D

III   18   18a

18

30

Fig.2

18

30

Fig. 3

19

18a

Fig 4

N

b2

b4

D1

S

N

D4

θ

b1

b3

N

S

D3

N

S

D2

S

N

N

S

## Fig.5

## Fig.13

Fig.6

Fig. 7

Fig. 10

13

Fig. 8

g'10

g'30

b'1

g''10

g''30

g'20

g'40

b'2

g''20

g''40

Fig. 9

b'2

S

b'1

N

θ

S

b'2

N

b'1

S

N

N

S

Fig.11

XII

S    N    39

N         S    40

·38

S         N    39

N    S

40

XII

S

40

36

NS    35

Fig.12

38

37    NS

39

N